**Europäisches Patentamt**

**European Patent Office**

**Office européen des brevets**

(19)

(11) Veröffentlichungsnummer : **0 071 697**
**B1**

(12) **EUROPÄISCHE PATENTSCHRIFT**

(45) Veröffentlichungstag der Patentschrift :
**11.12.85**

(51) Int. Cl.⁴ : **A 01 F 12/18**

(21) Anmeldenummer : **82103028.5**

(22) Anmeldetag : **08.04.82**

(54) Dreschvorrichtung einer Erntemaschine.

(30) Priorität : **19.06.81 DE 3123992**

(43) Veröffentlichungstag der Anmeldung :
**16.02.83 Patentblatt 83/07**

(45) Bekanntmachung des Hinweises auf die Patenterteilung : **11.12.85 Patentblatt 85/50**

(84) Benannte Vertragsstaaten :
**AT DE FR GB IT**

(56) Entgegenhaltungen :
**AT-B-  255 188**
**DE-C-  552 940**
**FR-A- 2 406 383**
**FR-A- 2 467 537**
**US-A- 2 217 590**
**US-A- 3 410 271**
**US-A- 3 817 256**

(73) Patentinhaber : **Klöckner-Humboldt-Deutz AG Zweigniederlassung Fahr**

**D-7702 Gottmadingen (DE)**

(72) Erfinder : **Ott, Ernst**
**Juraweg 13**
**D-8881 Wittislingen (DE)**

Jouve, 18, rue St-Denis, 75001 Paris, France

**Beschreibung**

Die Erfindung betrifft eine Dreschvorrichtung mit einer Dreschtrommel, auf deren Umfang mit Abstand befestigte Schlagleisten vorgesehen sind, wobei zwischen jeweils zwei aufeinanderfolgende Schlagleisten Abdeckelemente angeordnet sind, die über die gesamte Breite der Dreschtrommel verlaufen, dit mit nach außen gerichteten Erhöhungen versehen sind, und die den Zwischenraum zwischen den Schlagleisten mindestens teilweise abdecken und einem der Dreschtrommel etwa radial zugeordneten Dreschkorb.

Es sind Dreschtrommeln bekannt, wo der freie Zwischenraum zwischen den Schlagleisten abgedeckt ist (Prospekt « Claas Information Nr. 39 », Impressum 50 Ro 4/80-189.482.1).

Dies ist insbesondere bei mit niedrigen Drehzahlen arbeitenden Dreschtrommeln sowie auch bei Erntemaschinen der Axialfluß-Bauart der Fall und soll verhindern, daß das Erntegut in den freien Raum der Dreschtrommel gelangen kann und somit am Dreschvorgang nicht teilnimmt und außerdem zu Verstopfungen führen kann.

Es sind auch Ausführungen bekannt, wie z. B. aus der AT-B-2 55 188 ersichtlich, bei denen die freien Zwischenräume mittels flexibler Elemente, die sich bei Rotation des Zylinders infolge der Zentrifugalkräfte nach außen bewegen, abgedeckt sind. Damit soll auch eine Erhöhung der Abscheidewirkung erzielt werden. Eine Einstellung auf verschiedene Erntegutarten und -zustände is mit dieser Einrichtung nicht möglich.

Aus der US-A-3 410 271 ist eine Ausführung bekannt, bei der die Reibleisten in Form von nebeneinander und mit Abstand angeordneten Reibstiften, die durch Ausnehmungen von am Umfang angebrachten Abdeckblechen hindurchragen, gebildet werden. Die Abdeckbleche können dabei radial verschoben werden, so daß das Überstandsmaß der Reibstifte veränderbar und somit die Dreschwirkung einstellbar ist. Das Verschieben der Abdeckbleche ist jedoch sehr aufwendig und erfordert die Zugänglichkeit über die gesamte Breite der Dreschtrommel. Außerdem ist die Verwendung von ganzstückigen Reibleisten hierbei nicht möglich.

Aufgabe der Erfindung ist es, die genannten Nachteile zu vermeiden und eine Dreschvorrichtung mit einer Dreschtrommel und einem Dreschkorb derart auszubilden, daß ein Eindringen von Erntegut in den freien Raum der Dreschtrommel verhindert wird. Außerdem soll mit der Erfindung eine einfache und zugängliche Einrichtung gebildet werden, die eine Einstellbarkeit der Dreschtrommel auf verschiedene Erntegutarten und -zustände gewährleistet.

Diese Aufgabe wird durch den kennzeichnenden Teil des Hauptanspruchs gelöst.

Weitere vorteilhafte Weiterbildungen sind den daran anschließenden Unteransprüchen zu entnehmen.

Die vorgeschlagene Erfindung kann bei Erntemaschinen der Tangentialfluß- sowie auch der Axialflußbauart und auch bei kombinierten Systemen Anwendung finden.

Ausführungsbeispiele der Erfindung werden in den Zeichnungen dargestellt und näher beschrieben. Es zeigen :

Figur 1 eine Seitenansicht einer gemäß Erfindung ausgebildeten Dreschtrommel und einen Dreschkorb.

Figur 2 eine Einzelheit « Z » gemäß der Figur 1 in vergrößertem Maßstab.

Figur 3 eine Draufsicht « X » gemäß der Figur 1 im Maßstab nach der Figur 2.

Figur 4 eine Seitenansicht einer weiteren erfindungsgemäßen Ausführungsform einer Dreschtrommel und einem Dreschkorb.

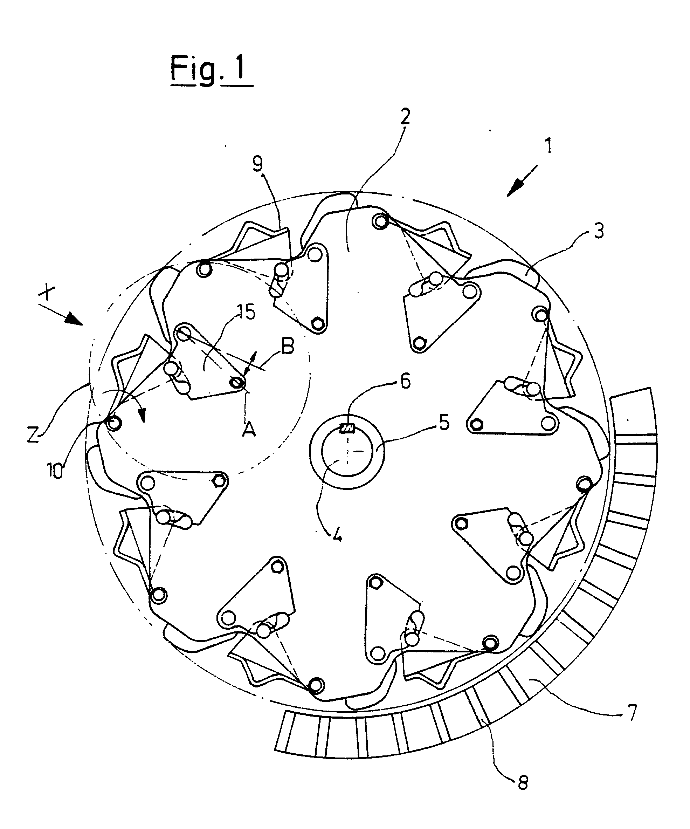

Figur 1 zeigt eine Dreschtrommel 1, die gebildet ist aus auf Büchsen 5 angeordneten und parallel zueinander verlaufenden Trommelscheiben 2, die an ihrem Außenumfang Einbuchtungen aufweisen und durch Schlagleisten 3 miteinander verbunden werden. Die die Trommelscheiben 2 aufnehmenden Büchsen 5 sind auf eine in den Seitenwänden des Mähdreschergehäuses drehbar gelagerten Welle 4 aufgeschoben und gegen Verdrehen mittels Keil 6 gesichert. In radialem Abstand zur Dreschtrommel 1 ist ein mit Gitterstäben 8 versehener Dreschkorb 7 angebracht.

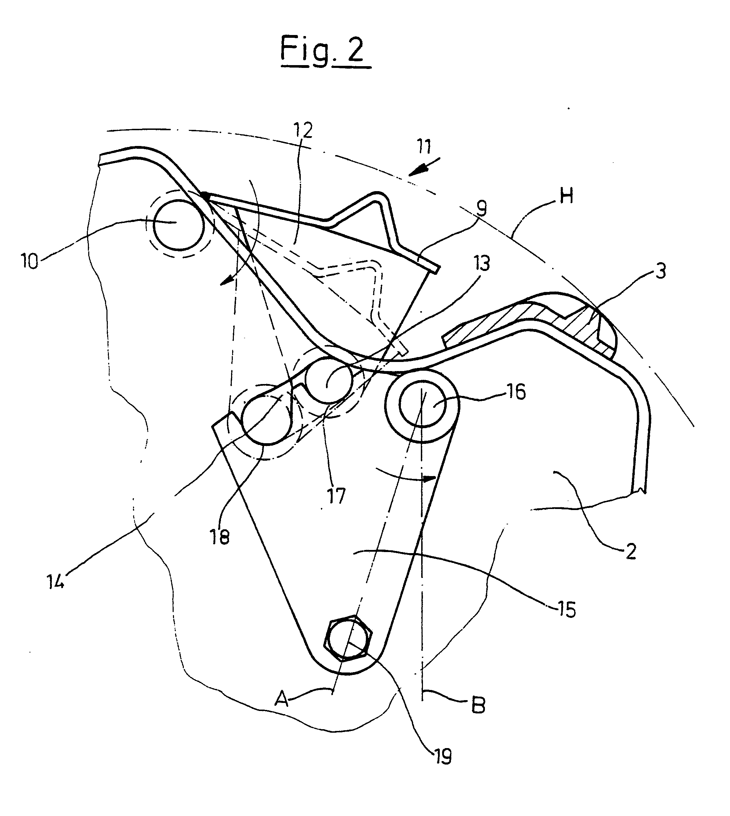

In den Einbuchtungen (Figur 2) bzw. im freien Raum zwischen den Schlagleisten 3 sind Abdeckbleche 9 angebracht. Die Abdeckbleche 9 sind schwenkbeweglich um die Achse 10 angelenkt und erstrecken sich etwa über die Breite der Dreschtrommel 2. An den freien Schenkeln der Abdeckbleche 9, welche entgegen der Drehrichtung der Dreschtrommel 1 verlaufen, sind Erhebungen in Form einer Reibleiste 11, die auf den Hüllkreis « H » gerichtet ist, angebracht.

Unterhalb der Abdeckbleche 9 und in Richtung der Welle 4 sind Führungsbleche 12, die mit einem Bolzen 13 versehen sind, befestigt. Der Bolzen 13 erstreckt sich über die gesamte Breite der Dreschtrommel 1 und wird in langlochartigen Führungsschlitzen 14 der Trommelscheiben 2 geführt.

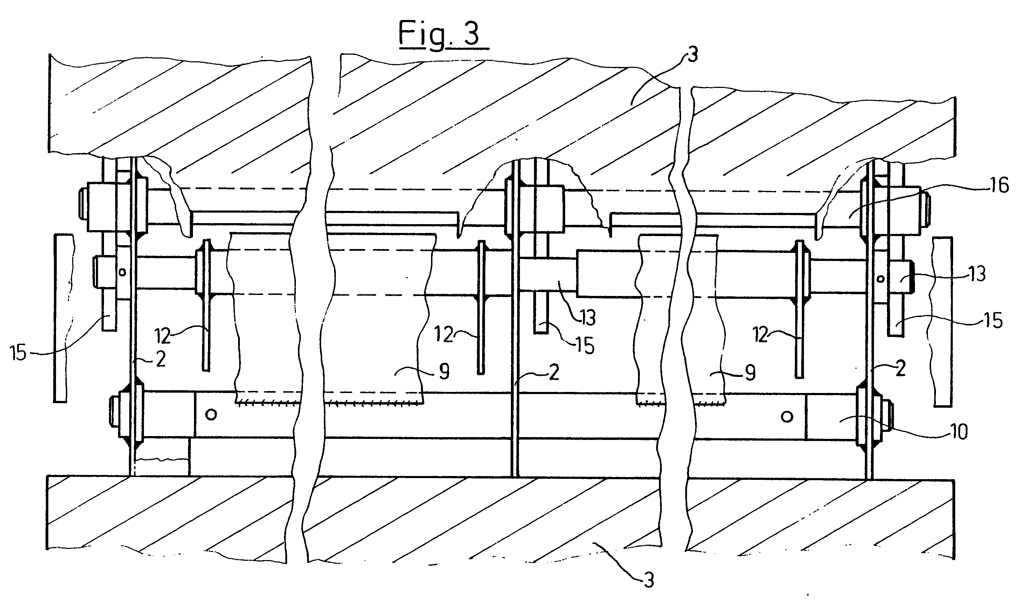

Auf der äußeren Stirnfläche der Dreschtrommel 1 ist ein Riegel 15 um eine Achse 16 verschwenkbar angelenkt. Die Achse 16 erstreckt sich ebenfalls über die Breite der Dreschtrommel (Figur 3) und weist mehrere über die Breite verteilte Riegel 15, die auf die Bolzen 13 einwirken, auf.

Der Riegel 15 besitzt an seiner Außenkontur zwei halbkreisförmige Vertiefungen 17, 18, die zur Aufnahme und Verriegelung der Bolzen 13 dienen.

In der in Figur 2 in durchgezogenen Linien dargestellten Stellung befindet sich die Reibleiste 11 in

2

ihrer äußersten Lage. Der Bolzen 13 steht an der äußeren Kante des Führungsschlitzes 14 an und wird über die Vertiefung 17 des Riegels 15 in dieser Lage arretiert. Der Riegel 15 wird mittels einer Feststellschraube 19 in seiner Lage « A » festgehalten.

Die in Figur 1 gezeigte Lage der Reibleisten 11, in welcher ein hoher Drescheffekt erzielt wird, verwendet man z. B. beim Dreschen von Corn-Cob-Mix, wobei nicht nur die Körner des Maiskolbens geerntet werden, sondern auch ein großer Teil der Spindeln. Durch den erhöhten Dresch- bzw. Schlageffekt durch die zusätzlichen Reibleisten 11 werden auch die Spindeln zerkleinert und können somit ebenfalls durch die Siebelemente gewonnen werden.

Beim « Körnermaisernten », wobei nur die Körner geerntet werden, muß die Schlagleistung der Drescheinrichtung wieder verringert werden.

In diesem Fall werden die Abdeckbleche 9 bzw. die Reibleisten 11 nach innen aus dem wirksamen Dreschbereich geschwenkt (Figur 2, strichpunktierte Darstellung). Dies wird folgendermaßen durchgeführt :

Die Feststellschraube 19 wird gelöst und der Riegel 15 von A nach B verschwenkt. Dadurch wird der Bolzen 13 frei und kann im Führungsschlitz 14 nach innen verschoben werden, bis er an der inneren Kante des Schlitzes 14 ansteht. Der Riegel 15 wird von der Stellung B nach A zurückgeschwenkt und mit der Feststellschraube 19 gesichert, womit die Vertiefung 18 den Bolzen 13 teilweise umgreift und somit arretiert.

Beim Anbringen von mehr als zwei Vertiefungen am Riegel 15 ist es auch möglich, kleinere Stufensprünge bei der Verstellung der Abdeckbleche vorzunehmen.

Über die Breite der Dreschtrommel gesehen (Figur 3), ist das Abdeckblech 9 mit mehreren Führungsblechen 12, an denen der Bolzen 13 befestigt ist, versehen. Ebenfalls wird der Bolzen 13 durch mehrere über die Breite verteilte Riegel 15 in seiner Lage gesichert. Die Riegel 15 im inneren Bereich der Trommel weisen allerdings keine Feststellschrauben 19 auf, sondern sind über die Achse 16 mit dem äußeren Riegel 15, der mit der Schraube 19 gesichert ist, in fester Drehverbindung.

Durch diese Anordnung wird gewährleistet, daß das Abdeckblech 9 bzw. die Reibleiste 11 über die gesamte Breite ihre stabile Lage behält und die gute Zugänglichkeit an der Stirnseite der Dreschtrommel 1 gewährleistet wird.

Die Verstellung der Reibleisten 11 kann auch nur teilweise, im Umfangsrichtung gesehen, vorgenommen werden, muß aber wegen Vermeidung einer Unwucht immer konzentrisch erfolgen.

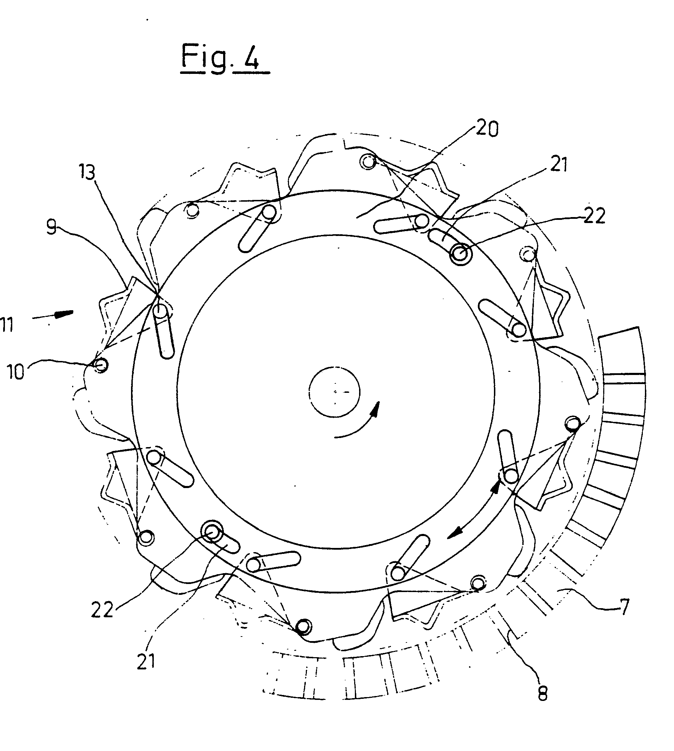

Im Beispiel der Figur 4 erfolgt die Verstellung der Reibleisten 11 über einen Verstellring 20 stufenlos.

Der Verstellring 20 wird durch Schlitzlöcher 21, welche Bolzen 22 durchdringen, geführt. Die Bolzen 13 der Abdeckbleche 9 sind in entgegen der Drehrichtung der Dreschtrommel 1 ansteigenden Langlöchern 23 geführt.

Durch Verdrehen des Verstellringes 20 verändern sich die Lagen der Bolzen 13 und somit die der Reibleisten. Der Verstellring 20 kann mittels nicht näher dargestellten Feststellelementen in seiner Lage arretiert werden. Die Bolzen 22 erstrecken sich ebenfalls über die Breite der Dreschtrommel 1 und führen mehrere über die Breite angeordnete Verstellringe 20. Die Verwendung eines Verstellringes bringt den Vorteil, daß sämtliche Reibleisten 11 gleichzeitig verstellt werden können und die Verstellung stufenlos erfolgt.

Durch die Anbringung der verstellbaren Abdeckbleche 9 mit den Reibleisten 11 wird in jeder Stellung der freie Zwischenraum der Schlagleisten 3 fast vollständig abgedeckt, womit ein Eindringen von Erntegut in den Innenraum der Dreschtrommel verhindert wird. Außerdem ist es möglich, die Dreschvorrichtung auf verschiedene Erntegutzustände und -arten einzustellen.

Die Erfindung bezieht sich jedoch nicht nur auf die in den Beispielen gezeigten Tangentialdreschvorrichtungen, sondern kann auch beim Dreschen nach dem Axialflußprinzip Anwendung finden.

Außerdem kann diese Einrichtung nicht nur bei Dreschvorrichtungen, sondern auch bei Trennvorrichtungen, insbesondere bei Axialfluß-Erntemaschinen, Anwendung finden.

Bezugszeichnen :

| 1 | Dreschtrommel |
|---|---|
| 2 | Trommelscheiben |
| 3 | Schlagleisten |
| 4 | Welle |
| 5 | Büchse |
| 6 | Keil |
| 7 | Dreschkorb |
| 8 | Gitterstab |
| 9 | Abdeckblech |
| 10 | Achse |
| 11 | Reibleiste |
| 12 | Führungsblech |
| 13 | Bolzen |
| 14 | Führungsschlitz |

15 Riegel
16 Achse für Riegel
17 Vertiefung
18 Vertiefung
19 Feststellschraube
20 Verstellring
21 Schlitzloch
22 Bolzen
23 Langloch

X Ansicht
H Hüllkreis
Z Einzelheit
A erste Lage
B zweite Lage

## Patentansprüche

1. Dreschvorrichtung mit einer Dreschtrommel (1), auf deren Umfang mit Abstand befestigte Schlagleisten (3) vorgesehen sind, wobei zwischen jeweils zwei aufeinanderfolgende Schlagleisten (3) Abdeckelemente (9) angeordnet sind, die über die gesamte Breite der Dreschtrommel verlaufen, die mit nach außen gerichteten Erhöhungen versehen sind, und die den Zwischenraum zwischen den Schlagleisten (3) mindestens teilweise abdecken und einem der Dreschtrommel (1) etwa radial zugeordneten Dreschkorb (7), dadurch gekennzeichnet, daß jedes Abdeckelement (9) einenends um eine parallel zur Rotationsachse verlaufende Achse (10) schwenkbar angeordnet und über eine Verstellvorrichtung in seiner Lage feststellbar ist und daß die Erhöhung in Form einer Reibleiste (11) ausgebildet ist.

2. Dreschvorrichtung nach Anspruch 1, dadurch gekennzeichnet, daß die freien Enden der verschwenkbaren Abdeckelemente (9) entgegen der Drehrichtung der Dreschtrommel (1) gerichtet sind.

3. Dreschvorrichtung nach Anspruch 1, dadurch gekennzeichnet, daß die Verstellvorrichtung innerhalb des Hüllkreises (H) der Dreschtrommel (1) schwenkbar angelenkt ist und mindestens zwei Raststellungen zur Aufnahme der Abdeckelemente (9) aufweist.

4. Dreschvorrichtung nach Anspruch 1, dadurch gekennzeichnet, daß jedem verschwenkbaren Abdeckelement (9) eine Verstellvorrichtung zugeordnet ist.

5. Dreschvorrichtung nach Anspruch 1, dadurch gekennzeichnet, daß die Verstelleinrichtung einstückig ist und sämtliche Abdeckelemente (9) gleichzeitig beaufschlagt.

6. Dreschvorrichtung nach Anspruch 1 oder 5, dadurch gekennzeichnet, daß die Abdeckelemente (9), über die Breite der Dreschvorrichtung gesehen, mindestens zweimal durch die Verstellvorrichtung angelenkt werden.

7. Dreschvorrichtung nach Anspruch 3 oder 5, dadurch gekennzeichnet, daß die Verstellvorrichtung, in Axialrichtung der Drehachse der Dreschtrommel (1) betrachtet, im Bereich einer äußeren Stirnfläche betätigbar ist.

8. Dreschvorrichtung nach Anspruch 1 oder 5, dadurch gekennzeichnet, daß die Abdeckelemente (9) stufenlos verstellbar sind.

9. Dreschvorrichtung nach Anspruch 5, dadurch gekennzeichnet, daß die Verstellvorrichtung aus einem zur Drehachse der Dreschtrommel (1) koaxial geführten Verstellring (20) gebildet ist, der entgegen der Drehrichtung der Dreschtrommel (1), in Umfangsrichtung gesehen, ansteigende Aufnahmeöffnungen (21), über welche die Abdeckelemente (9) geführt werden, aufweist.

## Claims

1. A threshing device having a threshing drum (1) with beaters (3) mounted at intervals along its circumference, a cover member (9) being disposed between every two successive beaters (3), said cover members — which extend over the entire width of the threshing drum — being provided with outwardly orientated raised portions and covering, at least partially, the intermediate space between the beaters (3), and (the threshing device) having a thresher basket (7) (concave) which is disposed substantially radially relative to the threshing drum (1), characterised in that one end of each cover member (9) is adapted so as to be pivotable about an axis (10) which extends parallel to the rotational axis, and each cover member is securable in its position via an adjusting means, and in that the raised portion is in the form of a rubbing ridge (11).

2. A threshing device according to claim 1, characterised in that the free ends of the pivotable cover members (9) are orientated in a direction opposite the rotational direction of the threshing drum (1).

3. A threshing device according to claim 1, characterised in that the adjusting means is pivotably mounted inside the circular casing (H) of the threshing drum (1) and has at least two locking positions for receiving the cover members (9).

4

4. A threshing device according to claim 1, characterised in that each pivotable cover member (9) has an adjusting means associated therewith.

5. A threshing device according to claim 1, characterised in that the adjusting means in integrally formed and simultaneously acts on all of the cover members (9).

6. A threshing device according to claim 1 or 5, characterised in that, when viewed over the width of the threshing device, the cover members (9) are hinged at least twice by the adjusting means.

7. A threshing device according to claim 3 or 5, characterised in that, when viewed in the axial direction of the rotational axis of the threshing drum (1), the adjusting means is actuable in the region of an outer end face.

8. A threshing device according to claim 1 or 5, characterised in that the cover members (9) are steplessly adjustable.

9. A threshing device according to claim 5, characterised in that the adjusting means is formed from an adjusting ring (20) which is guided coaxially with the rotational axis of the threshing drum (1) and is provided with receiving apertures (21) which, when viewed in the circumferential direction, rise in a direction opposite that of the rotational direction of the threshing drum (1), the cover members (9) being guided via said apertures.

**Revendications**

1. Dispositif de battage avec un cylindre batteur (1) sur le pourtour duquel sont prévus des battoirs (3) fixés à une certaine distance, et à chaque fois entre deux battoirs (3) se suivant sont disposés des éléments de recouvrement (9) qui s'étendent sur toute la largeur du cylindre batteur, et qui sont pourvus de bosses dirigées vers l'extérieur et qui couvrent au moins partiellement l'espace intermédiaire entre les battoirs (3) et un récipient (7) ajouté à peu près radialement au cylindre batteur 1, caractérisé en ce que chaque élément de recouvrement (9) est disposé pivotant d'une part autour d'un axe (10) parallèle à l'axe de rotation et peut être établi en position au moyen d'un dispositif de réglage et en ce que la bosse a la forme d'une baguette de friction (11).

2. Dispositif de battage selon la revendication 1 caractérisé en ce que les extrémités libres des éléments pivotants de recouvrement (9) sont dirigées contre la direction de rotation du cylindre batteur 1.

3. Dispositif de battage selon la revendication 1, caractérisé en ce que le dispositif de réglage est articulé pivotant à l'intérieur du cercle d'enveloppe H du cylindre batteur (1) et présente au moins deux positions d'arrêt pour la réception des éléments de recouvrement (9).

4. Dispositif de battage selon la revendication 1 caractérisé en ce qu'à chaque élément pivotant de recouvrement (9) est affecté un dispositif de réglage.

5. Dispositif de battage selon la revendication 1 caractérisé en ce que le dispositif de réglage est en une pièce et sollicite en même temps tous les éléments de recouvrement (9).

6. Dispositif de battage selon la revendication 1 ou 5, caractérisé en ce que les éléments de recouvrement (9), en regardant sur la largeur du dispositif de battage, sont articulés au moins deux fois par le dispositif de réglage.

7. Dispositif de battage selon la revendication 3 ou 5 caractérisé en ce que le dispositif de réglage, en considérant en direction axiale de l'axe de rotation du cylindre batteur 1, peut être actionné dans la zone d'une surface frontale externe.

8. Dispositif de battage selon la revendication 1 ou 5 caractérisé en ce que les éléments de recouvrement (9) sont réglables de manière continue.

9. Dispositif de battage selon la revendication 5 caractérisé en ce que le dispositif de réglage est formé d'une bague de réglage (20) guidée coaxialement à l'axe de rotation du cylindre batteur (1), qui, en regardant en direction périphérique de manière opposée à la direction de rotation du cylindre batteur (1), présente des ouvertures croissantes de réception (21) par lesquelles les éléments de recouvrement (9) sont guidés.

# Fig. 1

# Fig. 2

Fig. 3

# Fig. 4